# EUROPÄISCHE PATENTSCHRIFT

(11) **EP 3 022 990 B1**
(45) Veröffentlichungstag und Bekanntmachung des Hinweises auf die Patenterteilung: **30.08.2023**
(21) Anmeldenummer: 14752271.8
(22) Anmeldetag: 14.07.2014
(51) Int. Cl.: H05B 41/02, H05B 45/50

(54) **BELEUCHTUNGSVORRICHTUNG**
LIGHTING DEVICE
DISPOSITIF D'ÉCLAIRAGE

(30) Priorität: 15.07.2013 DE 102013011821
(43) Veröffentlichungstag der Anmeldung: 25.05.2016
(73) Patentinhaber: Eaton Protection Systems IP GmbH & Co. KG, 12529 Schönefeld (DE)
(72) Erfinder: BURMEISTER, Jens, 69412 Eberbach (DE); SOMMER, Ludger, 59075 Hamm (DE)
(74) Vertreter: Novagraaf Group
(86) Internationale Anmeldenummer: PCT/EP2014/001921
(87) Internationale Veröffentlichungsnummer: WO 2015/007380

(56) Entgegenhaltungen:
- EP-A2- 2 326 148
- WO-A1-2012/131573
- DE-U1-202011 110 097
- GB-A- 1 563 855
- JP-A- 2011 034 847
- US-A- 6 000 819
- US-A1- 2010 213 809
- Keith Billings: "Switchmode Power Supply Handbook (2nd edition)", 1999, McGraw-Hill, XP002732110, ISBN: 0070067198 Seiten 1.89-1.100, das ganze Dokument

## Beschreibung

Die vorliegende Anmeldung bezieht sich auf eine Beleuchtungsvorrichtung mit wenigstens einem Sockel, in den ein Leuchtmittel eingesetzt werden kann. Der Sockel weist elektronische Anschlüsse zur Versorgung des Leuchtmittels auf, wobei eine elektrische oder elektronische Vorschaltvorrichtung in der Beleuchtungsvorrichtung vorgesehen ist, die eine geeignete elektrische Versorgung einer Leuchtstofflampe gewährleistet.

Es ist im Stand der Technik bekannt, dass Beleuchtungsvorrichtungen in Form von Lampenfassung elektrische oder elektronische Vorschaltvorrichtungen, wie zum Beispiel Transformatoren aufweisen, um eine geeignete Spannung für Glühlampen, einschließlich Halogenlampen, bereitzustellen.

Genau so ist es im Stand der Technik bekannt, dass in Beleuchtungsvorrichtungen konventionelle oder elektronische Vorschaltgeräte vorgesehen sind, die eine Zündung der Leuchtstofflampe und durch eine hochfrequente Wechselspannung einen flimmerfreien Betrieb derselben ermöglichen.

Weiterhin ist es im Stand der Technik bekannt, LEDs (Leuchtdioden) als Leuchtmittel einzusetzen. So wird beispielsweise in der DE 10 2004 044 166 B4 eine explosionsgeschützte Leuchte mit Leuchtdioden als Lichtquelle offenbart, wobei die Leuchtdioden von einem geeigneten elektronischen Vorschaltgerät versorgt werden.

Auch sind aus dem Stand der Technik Anwendungen bekannt, in denen eine Austauschbarkeit von Leuchtstofflampen oder Glühlampen durch Leuchtmittel die LEDs aufweisen, ermöglicht wird.

So sind beispielsweise Leuchtmittel bekannt, die im Wesentlichen die Form einer Glühlampe aufweisen, und in eine konventionelle Glühlampenfassung eingesetzt werden, in denen aber Licht mittels LEDs erzeugt wird. Dafür ist in derartigen Lampen ein Vorschaltgerät in dem Leuchtmittel selbst vorgesehen.

Weiterhin ist aus der DE 299 00 320 U1 ein LED-Leuchtmittel (Leuchtdioden-Leuchtmittel) bekannt, mit dem eine Leuchtstofflampe ersetzt werden kann, wobei die Versorgung des LED-Leuchtmittels über einen Kabelsatz erfolgt, mit dem der Stecksockel mit einer Bordspannungsquelle eines Kraftfahrzeugs verbunden werden kann, so dass im LED-Leuchtmittel lediglich eine Diode vorgesehen werden muss, die eine Zerstörung der Leuchtdioden bei irrtümlichem Verwechseln der Polarität beim Einstecken des LED-Leuchtmittels in den Stecksockel verhindern kann. Weiterhin kann das LED-Leuchtmittel Schaltmittel aufweisen, mit denen die Leuchtdioden einzeln, paar- oder gruppenweise ein- oder ausgeschalten werden können.

DE 20 2011 11 97 U1 beschreibt ein Leuchtmittel, bei dem ein elektronisches Vorschaltgerät und Anschlussstifte sowohl für eine Leuchtstoffröhre als auch für eine Anzahl von LED's verwendet werden können. Eine entsprechende Schaltung zur Versorgung der LED's ist in einem Ersatzmodul für die Leuchtstoffröhre angeordnet und umfasst beispielsweise einen Gleichrichter, eine TSV-Diode und einen Zünddetektor. Außerdem sind weitere Teile in der Schaltung angeordnet. In dieser Druckschrift wird darauf hingewiesen, dass insbesondere in Folge einer detektierten "Zündung" weiterhin eine Betriebsspannung durch das elektronische Vorschaltgerät zur Verfügung gestellt wird. Weitere Ausführungen zu dieser Betriebsspannung werden nicht gemacht.

Aufgabe der vorliegenden Erfindung ist, eine gattungsgemäße Beleuchtungsvorrichtung dahingehend zu verbessern, dass ein einfacher Wechsel zwischen beispielsweise Leuchtstofflampe und einem LED-Leuchtmittel mit einer Anzahl von LEDs möglich ist, ohne dass elektrische oder mechanische Anpassungen der Beleuchtungsvorrichtung notwendig sind.

Diese Aufgabe wird durch die Merkmale des Patentanspruchs 1 gelöst.

Ein entsprechendes LED-Leuchtmittel kann erfindungsgemäß ohne mechanische oder elektrische beziehungsweise elektronische Anpassungen in die Beleuchtungsvorrichtung eingesetzt werden, die ansonsten mit dem elektrischen oder elektronischen Vorschaltgerät für eine oder mehrere Leuchtstofflampen geeignet ist. Das bedeutet, die Beleuchtungsvorrichtung kann wahlweise mit Leuchtstofflampen oder einem entsprechenden LED-Leuchtmittel verwendet werden, ohne weitere Maßnahmen an der Vorschaltvorrichtung, der Verdrahtung oder ein Umschalten durch Verwendung einer Umschalteinrichtung oder dergleichen.

Stattdessen wird eine entsprechende Anzahl von LEDs verwendet, die in Reihe geschaltet sind, und deren Stromwert im Wesentlichen einem Lampenstrom im Betrieb der Beleuchtungsvorrichtung mit Leuchtstofflampe oder Leuchtstofflampen entspricht.

Bei elektronischen Vorschaltgeräten für Leuchtstofflampen wird die Eingangswechselspannung gleichgerichtet und mittels Hochsetzsteller auf eine geregelte Gleichspannung (sogenannte Zwischenkreisspannung) konvertiert.

Diese Konvertierung ist notwendig um eine, in den Normen (EN 61000) geforderte Korrektur des Leistungsfaktors und damit nahezu sinusförmige Stromaufnahme aus dem Versorgungsnetz zu erreichen.

Die Vorschaltvorrichtung weist eine Transistor-Halbbrücke und einen LC-Reihenschwingkreis auf wobei die Leuchtstofflampe parallel zum Kondensator des LC-Reihenschwingkreises geschaltet ist.

Die oben erwähnte Zwischenkreisspannung wird mit einer solchen Transistor-Halbbrücke im Gegentakt in eine Rechteckspannung mit konstanter Frequenz konvertiert. Heute übliche Schaltfrequenzen moderner EVGs liegen im Bereich von 20kHz bis 60kHz. Durch diese entsprechende Anordnung wird aus einem System konstanter Spannung und konstanter Frequenz ein System mit konstantem Strom, wobei dies dem Prinzip einer Boucherot-Schaltung entspricht.

Alle vorangehend genannten Bauteile beziehungsweise Schaltkreise der Vorschaltvorrichtung sind zum Betrieb der Leuchtstofflampe oder von Leuchtstofflampen im Einsatz. Um in einfacher Weise ein entsprechendes LED-Leuchtmittel auch mit einer solchen vorangehend beschriebenen Vorschaltvorrichtung benutzen zu können, kann das LED-Leuchtmittel einen Brückengleichrichter aufweisen oder ein solcher Brückengleichrichter ist dem LED-Leuchtmittel zugeordnet.

In diesem Zusammenhang ist zu beachten, dass eine noch nicht gezündete Leuchtstofflampe einen hohen ohmschen Widerstand im Bereich von einigen 100 kΩ aufweist. Der entsprechende LC-Schwingkreis läuft somit zuerst im Leerlauf, sodass die Spannung am Kondensator des Schwingkreises so lange ansteigt, bis die Leuchtstofflampe gezündet hat und den Schwingkreis anschließend mit einem Widerstand in der Größenordnung von einigen 100 Ω belastet. Dieser Widerstand ist abhängig vom Lampentyp. Um eine entsprechend hohe Startspannung zu erreichen, wird während der Startphase eine Schaltfrequenz der eingangs genannten Transistor-Halbbrücke bis nahe an eine Resonanzfrequenz geändert. Nachdem die Leuchtstofflampe gezündet hat, wird diese Frequenz konstant gehalten und der Lampenstrom ist unabhängig vom Lampentyp auf nahezu konstantem Wert.

Der Reihenschwingkreis wird erfindungsgemäß bereits in einer solchen Startphase bei Verwendung des LED-Leuchtmittels belastet, sodass an dem entsprechenden Kondensator des Schwingkreises keine hohen Spannungen entstehen und der Schwingkreis sofort als Stromquelle wirkt. Dies wird in einfacher Weise dadurch realisiert, dass die Spannung an diesem Kondensator des Schwingkreises mit dem genannten Brückengleichrichter gleichgerichtet wird und diese Gleichspannung direkt mit der entsprechenden Anzahl von in Reihe geschalteten LEDs belastet wird. Dazu werden vorzugsweise Dioden für den Brückengleichrichter verwendet, die bezüglich ihrer Sperrverzugszeiten an die Schaltfrequenz des Vorschaltgerätes angepasst sind.

Der entsprechende Stromwert der LEDs ist dabei im Wesentlichen gleich dem Lampenstrom bei Betrieb mit einer oder mehreren Leuchtstofflampen. Die Vorschaltvorrichtung für Leuchtstofflampen des Typ 18W/T8 beziehungsweise 36W/T8 liefert einen Lampenstrom von 300 mA bis 320 mA. Ein solcher Wert bietet sich für den Betrieb von Hochleistungs-LEDs an.

Durch die entsprechende Anzahl von LEDs kann auf diese Weise die Spannung des Kondensators so angepasst werden, dass sie in etwa der Brennspannung einer Leuchtstofflampe entspricht.

Bei den LEDs sind verschiedene Bauteilfehler möglich. Um solche in der erfindungsgemäßen Beleuchtungsvorrichtung berücksichtigen zu können, kann dem LED-Leuchtmittel zwischen LEDs und Brückengleichrichter eine Thyristor-Klemmschltung als Schutzschaltung zugeordnet sein. Eine solche Thyristor-Klemmschaltung wird auch Thyristor-Crowbar genannt.

Mögliche Bauteilfehler der LEDs sind ein Durchlegieren und damit Kurzschluss der LED oder die LED wird beispielsweise durch eine Unterbrechung der Bond-Drähte hochohmig.

Wie bereits oben erläutert, verhält sich die Vorschaltvorrichtung in einem relativ großen Lastbereich wie eine Konstantstromquelle. Der Kurzschluss einer oder mehrerer der in Reihe geschalteten LEDs ist in der Regel unkritisch. Eine Unterbrechung einer LED bedeutet gleichzeitig eine Unterbrechung des gesamten Lastkreises des entsprechenden Schwingkreises. Folge ist ein Ansteigen der Ausgangsspannung der Vorschaltvorrichtung bis auf Werte von mehreren 100 Veff. Diese hohe Spannung wird in modernen Vorschaltvorrichtungen innerhalb von einigen 100 ms oder weniger abgeschaltet. Um eine solch hohe Spannung zu verhindern, wird die Vorschaltvorrichtung vom LED-Leuchtmittel beziehungsweise dessen zugeordneter Thyristor-Klemmschaltung bei einer Unterbrechung des Lastkreises kurz geschlossen. Dies wird dadurch erreicht, dass die auch Thyristor-Crowbar-Schaltung genannte Thyristor-Klemmschaltung die gleichgerichtete Ausgangsspannung ständig überwacht und bei Erreichen einer festgelegten, maximalen Spannugsschwelle den Thyristor der Klemmschaltung zündet und damit die Vorschaltvorrichtung kurz schließt.

Um nicht nur elektrisch beziehungsweise elektronisch die Leuchtstofflampe in einfacher Weise durch ein entsprechendes LED-Leuchtmittel ersetzen zu können, kann dieses LED-Leuchtmittel als LED-Modul ausgebildet sein, das anstelle einer oder auch mehrere Leuchtstofflampen in die Beleuchtungsvorrichtung mit dem entsprechenden Sockel einsetzbar ist. Ein solches LED-Modul enthält den Brückengleichrichter und die Thyristor-Klemmschaltung als Schutzschaltung.

Erfindungsgemäß ist es daher möglich, eine entsprechende Beleuchtungsvorrichtung einzubauen, wobei noch beim Einbau offen gelassen wird, ob später eine Leuchtstofflampe oder ein LED-Leuchtmittel verwendet wird. Eine Umrüstung der Beleuchtungsvorrichtung hinsichtlich mechanischer Einrichtungen oder hinsichtlich der elektrischen Versorgung ist nicht notwendig. Es besteht stattdessen die Möglichkeit, anstelle von einer oder mehreren Leuchtstofflampen ein entsprechendes LED-Modul einzusetzen, wobei es in diesem Zusammenhang auch möglich ist, die Beleuchtungsvorrichtung explosionsgeschützt auszugestalten.

Wie bereits ausgeführt, ist die Beleuchtungsvorrichtung bei einem bevorzugten Ausführungsbeispiel explosionsgeschützt ausgeführt. Die entsprechende Vorschaltvorrichtung kann gekapselt sein, sodass sie nicht in Kontakt mit einer eventuell explosiven Umgebung ist. Weiterhin kann durch die modulare und kompakte Anordnung eine Wärmeableitung verbessert erfolgen, sodass die Beleuchtungsvorrichtung insgesamt eine gewisse Temperatur nicht überschreitet. Auch das entsprechende LED-Leuchtmittel kann insbesondere als LED-Modul kompakt und für sich explosionsgeschützt ausgestattet sein. D. h., Beleuchtungsvorrichtung und Leuchtmittel sein in Zündschützart Ex-e, Ex-d oder Ex-m ausgebildet.

Das LED-Leuchtmittel aufweist Anschlüsse, die denen der einer Leuchtstofflampe entsprechen, sodass sowohl Leuchtstofflampe als auch LED-Leuchtmittel alternativ in die gleichen Fassungen eingesetzt werden können. Dazu ist das LED-Leuchtmittel mit Anschlüssen ausgestaltet, die in ihrer Anordnung am LED-Leuchtmittel und in ihrer Form denen Leuchtstofflampen entsprechen.

Die Beleuchtungsvorrichtung weist beispielsweise einen Grundkörper zur Halterung der Leuchtmittel und eine transparente oder transluzente Abdeckung auf, die auf an dem Grundkörper aufsetzbar ist und das Leuchtmittel abdeckt. Durch die Abdeckung kann außerdem das Leuchtmittel vor einer eventuell explosiven Atmosphäre abgeschirmt werden. Bei einem Ausführungsbeispiel kann die Beleuchtungsvorrichtung Sockel zur Aufnahme von wenigstens zwei verschiedenen und parallel angeordneten Leuchtstofflampen aufweisen. In diese Sockel ist alternativ das entsprechende LED-Leuchtmittel beziehungsweise -Modul einsetzbar. Die Beleuchtungsvorrichtung kann mit Wechselspannung versorgt werden. Allerdings ist auch eine Versorgung mit Gleichspannung möglich.

Auch das LED-Leuchtmittel kann analog zur Leuchtstofflampe nach Einsetzen in den entsprechenden Sockel analog zur Leuchtstofflampe nach Einsetzen in den entsprechenden Sockel mit seinen Anschlüssen verriegelt werden. Dazu kann jedem Sockel eine Verriegelungseinrichtung zugeordnet sein.

Zur einfachen Anpassung und Ausgestaltung der entsprechenden Anschlüsse insbesondere in Form von Stiftkontakten, kann an Enden des LED-Leuchtmittels beziehungsweise - Moduls jeweils ein Stiftgehäuse zur Aufnahme der Anschlüsse beziehungsweise Stiftkontakte angeordnet sein.

Im Folgenden wird ein vorteilhaftes Ausführungsbeispiel der Erfindung anhand der beigefügten Figuren erläutert.

Es zeigen:
- Figur 1: eine erfindungsgemäße Beleuchtungsvorrichtung in isometrischer Ansicht von schräg oben mit zugehörigen Leuchtmitteln;
- Figur 2: die erfindungsgemäße Beleuchtungsvorrichtung in isometrischer Ansicht von schräg unten mit Leuchtstofflampen als Leuchtmittel;
- Figur 3: die erfindungsgemäße Beleuchtungsvorrichtung in isometrischer Ansicht von schräg unten mit einem LED-Leuchtmittel;
- Figur 4: eine schematische Ansicht der Vorschaltvorrichtung mit Leuchtstofflampen;
- Figur 5: eine schematische Ansicht der Vorschaltvorrichtung mit einem LED-Leuchtmittel;
- Figur 6: eine schematische Ansicht der Sockel am Befestigungsflansch der erfindungsgemäßen Beleuchtungsvorrichtung;
- Figur 7: eine Prinzipdarstellung eines LED-Leuchtmittels mit weiteren Einrichtungen;
- Figur 8: eine Prinzipdarstellung einer elektronischen Vorschaltvorrichtung mit Leuchtstofflampe, und
- Figur 9: eine Prinzipdarstellung eines Brückengleichrichters mit Klemmschaltung zur Versorgung einer Anzahl von LEDs.

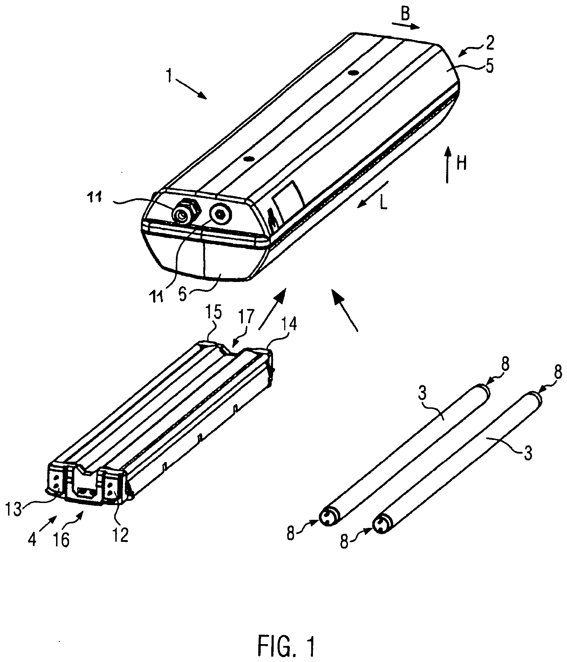

In Figur 1 ist eine Leuchte 1 dargestellt, die aus einer Beleuchtungsvorrichtung 2 besteht, in die ein Leuchtmittel 3, 4 eingesetzt werden kann. Als Leuchtmittel sind alternativ Leuchtstofflampen 3 oder ein LED-Leuchtmittel 4 vorgesehen. Die Beleuchtungsvorrichtung 2 besteht aus einem Grundkörper 5, der vorteilhafterweise Befestigungsmittel aufweist, um an einer Wand oder Decke befestigt zu werden, und aus einer transparenten oder transluzenten Abdeckung 6, die auf dem Grundkörper 5 abnehmbar befestigt ist. Die Leuchte 1 ist explosionsgeschützt gestaltet, das heißt, dass insbesondere der Grundkörper 5 und die Abdeckung 6 so ausgestaltet sind, dass die im Grundkörper 5 enthaltene Elektrik und Elektronik und die darin eingesetzten Leuchtmittel 3, 4 durch die Abdeckung 6 abgeschirmt werden, so dass die Leuchte 1 auch in potentiell explosiven Umgebungsbedingungen eingesetzt werden kann.

Der Grundkörper 5 weist elektrische Versorgungsanschlüsse 11 auf, die über eine Versorgungsleitung an eine Wechselstromquelle angeschlossen werden können. Die elektrischen Versorgungsanschlüsse 11 sind ebenfalls explosionsgeschützt ausgestaltet.

Wenn die Abdeckung 6 vom Grundkörper 5 abgenommen wird, kann ein Einsetzen oder Austausch der Leuchtmittel 3, 4 erfolgen. Dafür weist der Grundkörper im Bereich seiner Endseiten in Längsrichtung L Befestigungsflansche 9, 10 auf, die sich in Breitenrichtung B erstrecken. Die Leuchtstofflampen 3 beziehungsweise die LED-Leuchtmittel 4 können von unten in Hochrichtung H in die Beleuchtungsflansche 9, 10 eingesetzt werden.

Dafür weisen die Leuchtstofflampen 3 an ihren jeweiligen Enden in Längsrichtung L Anschlüsse 8 auf, die jeweils aus zwei Stiftkontakten bestehen.

Dementsprechend, weist das LED-Leuchtmittel 4 entsprechend ausgestaltete Anschlüsse 12, 13, 14 und 15 auf, die jeweils auf den Endseiten 16, 17 in Längsrichtung L des LED-Leuchtmittels 4 vorgesehen sind. Die Abstände zwischen jeweils den zwei Anschlüssen 12, 13 auf der Endseite 16 und den zwei Anschlüssen 14, 15 auf der Endseite 17 entsprechen den Abständen der Kontaktierungen 18, 19, die jeweils an jedem der Befestigungsflansche 9, 10 hin zur Mitte des LED-Leuchtmittels 4 in Längsrichtung vorgesehen sind. Die Kontaktierungen 18, 19 können lediglich als Aufnahmen für die Stiftkontakte der Anschlüsse 8, 12, 13, 14, 15 ausgestaltet sein.

Somit können durch das LED-Leuchtmittel 4 zwei Leuchtstoffröhren 3 ersetzt werden. Dies hat den Vorteil, dass in dem Zwischenraum, der normalerweise zwischen den Leuchtstoffröhren 3 vorliegen würde, ebenfalls das integrale LED-Leuchtmittel 4 vorgesehen ist, wodurch eine Vielzahl von LEDs 22 gleichmäßig über das LED-Leuchtmittel 4 verteilt werden können, und somit eine höhere Lichtleistung erreichbar ist.

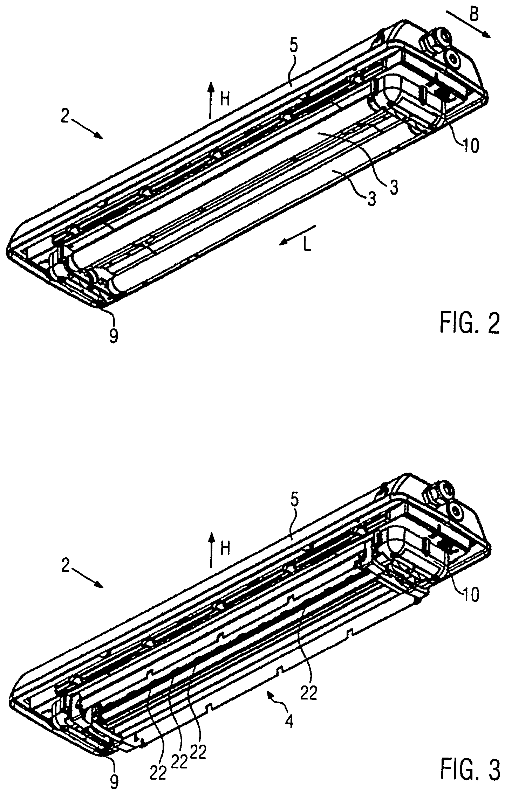

In Figur 2, sind zwei Leuchtstofflampen 3, die in den Grundkörper 5 der Beleuchtungsvorrichtung 2 eingesetzt sind, dargestellt.

Die Leuchtstofflampen 3 werden entweder durch Einsetzen und Verdrehen, oder durch andere geeignete Befestigungsmittel in den Kontaktierungen 18, 19 der Befestigungsflansche 9, 10 befestigt.

Nachdem die Leuchtstofflampen 3 entnommen wurden, kann in die gleichen Kontaktierungen 18, 19 der Befestigungsflansche 9, 10 das LED-Leuchtmittel 4 eingesetzt werden, wie in Figur 3 dargestellt. Nachdem die Anschlüsse 12, 13, 14, 15 des LED-Leuchtmittels 4 in die gleichen Kontaktierungen 18, 19 eingesetzt sind, muss nun die elektrische Versorgung der Kontaktierungen 18, 19 so angepasst werden, dass anstelle der Leuchtstofflampen 3 die LED-Leuchtmittel 4 betrieben werden können. Dafür ist es zweckmäßig, wenn automatisch festgestellt wird, ob eine Leuchtstofflampe 3 oder ein LED-Leuchtmittel 4 eingesetzt ist. Dies kann einerseits dadurch geschehen, dass eine elektronische Vorschaltvorrichtung 20 durch Anlegen einer elektrischen Prüfspannung oder eines Prüfstromes ermittelt, ob ein LED-Leuchtmittel 4 oder Leuchtstofflampen 3 eingesetzt sind. Dies wird insbesondere dadurch festgestellt, dass die LEDs 22 im LED-Leuchtmittel 4 und die Leuchtstofflampen 3 einen anderen elektrischen Widerstand aufweisen. Auch kann die automatische Bestimmung dadurch erfolgen, dass manche der Anschlüsse 12, 13, 14, 15 des LED-Leuchtmittels 4 lediglich zur Befestigung vorgesehen sind, aber nicht stromleitend sind.

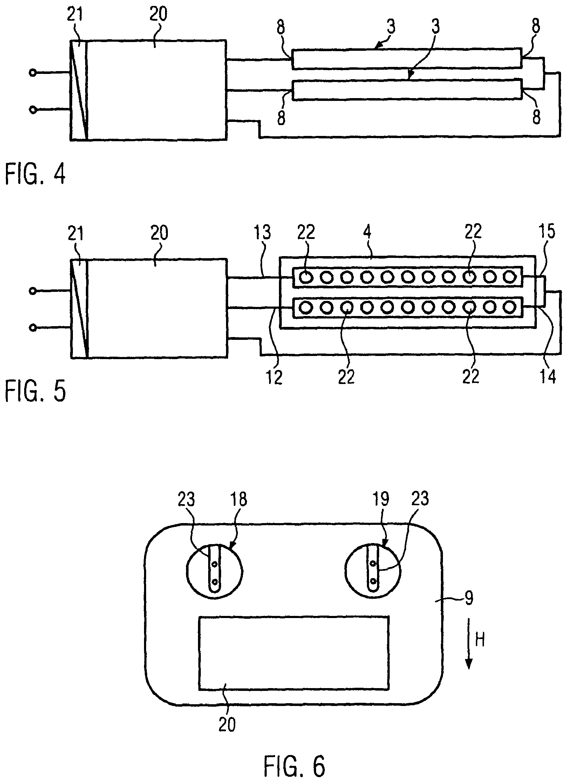

Andererseits kann die Bestimmung ob eine Leuchtstofflampe 3 oder ein LED-Leuchtmittel 4 in die Beleuchtungsvorrichtung 2 eingelegt ist auch dadurch geschehen, dass die Anwesenheit des LED-Leuchtmittels 4 durch Betätigung eines Schalters, der durch eine geeignete Geometrie des LED-Leuchtmittels 4, beispielsweise durch einen Vorsprung niedergedrückt wird, bestimmt wird. Andererseits kann die Anwesenheit eines LED-Leuchtmittels 4 auch durch einen Näherungssensor bestimmt werden, der die Anwesenheit des LED-Leuchtmittel 4 insbesondere im normalerweise freiliegenden Zwischenraum zwischen den Leuchtstofflampen 3 bestimmt. Schließlich kann die Anwesenheit des LED-Leuchtmittels 4 auch dadurch bestimmt werden, dass ein magnetischer Sensor im Grundkörper 5 vorgesehen ist, und ein entsprechendes magnetisches Element im LED-Leuchtmittel 4. Die elektronische Vorschaltvorrichtung 20 ist exemplarisch in den Figuren 4 und 5 dargestellt, wobei die elektronische Vorschaltvorrichtung integral im Grundkörper 5 der Beleuchtungsvorrichtung 2 verbaut ist.

In Figur 4 ist der Betrieb von zwei Leuchtstofflampen 3 mittels der elektronischen Vorschaltvorrichtung 20 und in Figur 5 der Betrieb von einem LED-Leuchtmittel 4 gezeigt.

In Figur 6 ist eine schematische Draufsicht auf einen Befestigungsflansch 9 des Grundkörpers 5 der Beleuchtungsvorrichtung 2 gezeigt, wobei im oberen Bereich in Höhenrichtung H die elektronischen Vorschaltvorrichtung 20 vorgesehen ist. Die elektronische Vorschaltvorrichtung 20 ist bevorzugterweise im Grundkörper 5 eingelassen. Der Befestigungsflansch 9 weist zwei Kontaktierungen 18, 19 auf, die zur Aufnahme der Anschlüsse 8, 12, 13, 14, 15 der Leuchtstofflampen 3 oder der LED-Leuchtmittel 4 geeignet sind. Die Kontaktierungen 18, 19 sind insbesondere lediglich schlitzartige Ausnehmungen 23, in die die beiden Stiftkontakte der jeweiligen Anschlüsse 8, 12, 13, 14, 15 eingesetzt werden können. Die Anschlüsse 8, 12, 13, 14, 15 können in den Kontaktierungen 18, 19 befestigt werden. Dies kann insbesondere durch ein Verdrehen der Anschlüsse 8, 12, 13, 14, 15 oder der Kontaktierungen 18, 19 geschehen. Andererseits sind aber auch Ausführungsformen möglich, in denen ein Einrasten der Anschlüsse 8, 12, 13, 14, 15 im Sockel vorgesehen wird.

Alternativ können die Leuchtstofflampen 3 auch durch Eindrehen befestigt werden, während das LED-Leuchtmittel 4 durch andere Befestigungsmittel bezüglich des Grundkörpers 5 befestigt wird.

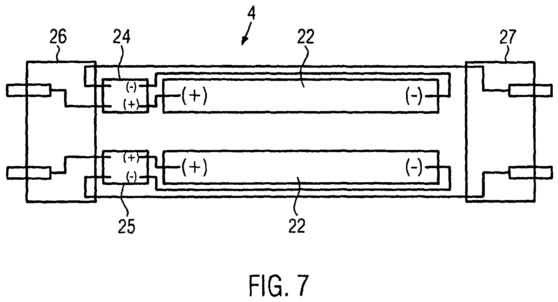

Figur 7 zeigt eine Prinzipdarstellung eines entsprechenden LED-Leuchtmittels 4 in Form eines LED-Moduls. Bei dem dargestellten Ausführungsbeispiel umfasst das LED-Leuchtmittel 4 zwei parallel angeordnete Leiterplatten mit entsprechender Anzahl von LEDs 22. Einem Ende einer jeden Leiterplatte ist jeweils eine elektronische Schaltung aus Brückengleichrichter und Schutzschaltung in Form einer Thyristor-Klemmschaltung 24, 25 zugeordnet. Weiterhin weist das LED-Leuchtmittel 4 an beiden Enden Stiftgehäuse 26 beziehungsweise 27 auf, die entsprechend mit den Kontaktierungen der Beleuchtungsvorrichtung verbindbar sind. Die Stiftgehäuse 26, 27 können mit entsprechenden Stiftkontakten analog zu Leuchtstofflampen ausgebildet sein.

Durch die Verwendung der elektronischen Schaltung 24, 25 ist außerdem gewährleistet, dass auch um 180° gedrehte LED-Module in der Leuchte betrieben werden können, da entsprechende Brückenschaltungen vorgesehen sind. Es besteht ebenfalls die Möglichkeit, dass statt einer Leiterplatte beispielsweise zwei oder auch mehr hintereinander und dann jeweils parallel zueinander angeordnet sind.

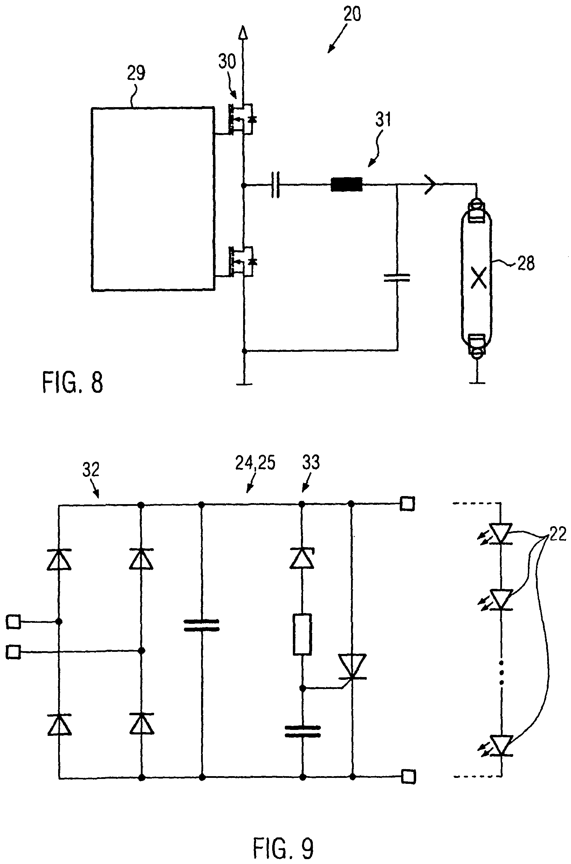

In Figur 8 ist eine Prinzipdarstellung einer entsprechenden Vorschaltvorrichtung 20 dargestellt. Insbesondere dient diese bei dem Ausführungsbeispiel nach Figur 8 zum Betrieb einer Leuchtstofflampe 28. Allerdings kann erfindungsgemäß diese Vorschaltvorrichtung auch ohne weitere Maßnahmen zum Betreiben eines entsprechenden LED-Leuchtmittels eingesetzt werden.

Die elektronische Vorschaltvorrichtung dient dazu, eine Eingangswechselspannung gleichzurichten und mittels Hochsetzsteller auf eine geregelte Gleichspannung, sogenannte Zwischenkreisspannung, zu konvertieren. Dazu dient die entsprechende Steuerschaltung 29 in an sich bekannter Weise.

Mittels einer Transistorhalbbrücke 30 wird nach Start der Leuchtstofflampe 28 die Zwischenkreisspannung im Gegentakt mit konstanter Schaltfrequenz in einem bestimmten Frequenzbereich zerhakt und einem LC-Reihenschwingkreis 31 zugeführt. Die entsprechende Leuchtstofflampe 28 ist parallel zu einem Kondensator des Schwingkreises 31 geschaltet.

Auf diese Weise wird aus einem System konstanter Spannung und konstanter Frequenz ein System mit konstantem Strom nach dem Prinzip einer Boucherot-Schaltung.

Wird die Leuchtstofflampe 28 durch ein entsprechendes LED-Leuchtmittel ersetzt, siehe Figur 9, weist dieses zusätzlich zu den einzelnen LEDs 22, die in Reihe geschaltet sind, einen Brückengleichrichter 32 und eine Schutzschaltung in Form einer Thyristor-Klemmschaltung 33 auf. Brückengleichrichter und Schutzschaltung sind in einer elektronischen Schaltung 24 beziehungsweise 25 enthalten, siehe auch Figur 7, die Teil des entsprechenden LED-Leuchtmittels beziehungsweise -Moduls sind.

Die entsprechenden Anschlüsse dienen zum Anschluss an die Vorschaltvorrichtung nach Figur 8, siehe auch Figuren 7 beziehungsweise 4 und 5.

Bei Verwendung der Vorschaltvorrichtung für eine Leuchtstofflampe läuft der entsprechende LC-Schwingkreis 31 nach Figur 8 im Leerlauf, solange die Leuchtstofflampe noch nicht gezündet hat und damit einen hohen ohmschen Widerstand aufweist. D. h., die Spannung an dem Kondensator des Schwingkreises steigt an, bis die Leuchtstofflampe zündet und den Schwingkreis anschließend belastet. Dabei sinkt der entsprechende Widerstand abhängig vom Lampentyp der Leuchtstofflampe.

Um eine nötige hohe Startspannung zu erreichen, wird während der Startphase die Schaltfrequenz der Halbbrücke 30, siehe Figur 8, bis nah an die Resonanzfrequenz geändert. Nachdem die Lampe 28 gezündet hat, wird die Frequenz konstant gehalten und der Lampenstrom ist unabhängig vom Lampentyp auf nahezu konstantem Wert.

Um den Schwingkreis 31 nach Figur 8 bereits in der Startphase so zu belasten, dass an dem Kondensator des Schwingkreises keine hohen Spannungen auftreten und der Schwingkreis sofort als Stromquelle wirkt, weist die entsprechende Schaltung des LED-Leuchtmittels einen Brückengleichrichter 32 auf. Dieser besteht aus vier insbesondere Hochleistungsdioden, d. h. die Dioden haben eine relativ hohe Schnelligkeit, sodass eine entsprechende Gleichspannung des Schwingkreises als Stromquelle direkt mit einer Anzahl von in Reihe geschalteten LEDs 22 belastet wird.

In diesem Zusammenhang ist zu beachten, dass ein Stromwert der LEDs 22 nach Figur 9 gleich dem Lampenstrom bei Betrieb der Leuchtstofflampe 28 nach Figur 8 ist. Dabei ist beispielsweise ein Lampenstrom bei einer Leuchtstofflampe des Typs 18W/T8 beziehungsweise 36W/T8 300 mA bis 320 mA, welcher Wert sich für den Betrieb von HochleistungsLED's (> 1W) anbietet. Durch eine entsprechende Anzahl von LEDs 22 kann die Spannung des Kondensators des Schwingkreises so angepasst werden, dass diese in etwa der Brennspannung der Leuchtstofflampe 28 nach Figur 8 entspricht.

Weiterhin weist die dem LED-Leuchtmittel zugeordnete Schaltung 24 beziehungsweise 25 die Schutzschaltung 33 auf. Diese dient zur Kompensation möglicher Bauteilfehler der LEDs 22.

In einem relativ großen Lastbereich verhält sich die Vorschaltvorrichtung wie eine Konstante-Stromquelle. Der Kurzschluss einer oder mehrerer der in Reihe geschaltenen LEDs 22 nach Figur 9 ist daher unkritisch. Eine Unterbrechung einer LED bedeutet gleichzeitig eine Unterbrechung des gesamten Lastkreises des Schwingkreises 31, siehe Figur 8. Die Folge ist ein Ansteigen der Ausgangsspannung der Vorschaltvorrichtung auf Werte von mehreren 100 Veff. Bei modernen Vorschaltvorrichtungen werden solche hohen Spannungen innerhalb von einigen 100 ms oder weniger abgeschaltet.

Um solche hohe Spannungen zu verhindern, sind beim LED-Leuchtmittel weitere Maßnahmen von Vorteil, siehe die Schutzschaltung 33 in Form einer Thyristor-Klemmschaltung beziehungsweise Crowbar-Schaltung.

Durch die Schutzschaltung wird erreicht, dass die Vorschaltvorrichtung bei Unterbrechung des Lastkreises kurzgeschlossen wird. Die Schutzschaltung überwacht ständig die gleichgerichtete Ausgangsspannung der Vorschaltvorrichtung. Bei Erreichen einer festgelegten maximalen Spannungsquelle zündet ein entsprechender Thyristor der Schutzschaltung und die Vorschaltvorrichtung wird kurz geschlossen.

Erfindungsgemäß besteht nach der vorangehenden Beschreibung die Möglichkeit, bei einer Beleuchtungsvorrichtung ohne mechanische oder elektronische Änderungen des Aufbaus beispielsweise eine Leuchtstofflampe durch ein LED-Leuchtmittel mit einer Anzahl von LEDs zu ersetzen. Ein solches Ersetzen kann auch nach Einbau der Beleuchtungsvorrichtung erfolgen. Zusätzliche Maßnahmen sind nicht erforderlich.

## Patentansprüche

1. Beleuchtungsvorrichtung (2), mit wenigstens einer Kontaktierung (18,19), in die ein Leuchtmittel (3,4) eingesetzt werden kann, wobei die Kontaktierung (18,19) elektrische Anschlüsse zur Versorgung des Leuchtmittels (3.4) aufweist, und wobei eine elektrische oder elektronische Vorschaltvorrichtung (20) in der Beleuchtungsvorrichtung (2) zur elektrischen Versorgung eine Leuchtstofflampe (3) angeordnet ist, wobei die Vorschaltvorrichtung (20) eine Transistorhalbbrücke (30) aufweist, die mit einer Schaltfrequenz betrieben wird, und einen LC-Reihenschwingkreis (31), zu dessen Kondensator das Leuchtmittel parallel geschaltet ist, und die Vorschaltvorrichtung (20) für eine Anzahl von in Reihe geschaltete LEDs (22) eines LED-Leuchtmittels (4) einsetzbar ist, wobei ein Stromwert der Anzahl der LEDs im Wesentlichen einem Lampenstrom bei Betrieb der Beleuchtungsvorrichtung (2) mit Leuchtstofflampe (3) entspricht, dass dem LED-Leuchtmittel (4) zwischen LEDs (22) und einem Brückengleichrichter (32) eine Thyristor-Klemmschaltung als Schutzschaltung (33) zugeordnet ist, wobei der Brückengleichrichter (32) vier Dioden aufweist, die bezüglich ihrer Sperrverzugszeiten an die Schaltfrequenz der Vorschaltvorrichtung (20) angepasst sind, und wobei die Beleuchtungsvorrichtung (2) explosionsgeschützt gestaltet ist und das Leuchtmittel Ex e, Ex d, Ex m oder Ex op.

2. Beleuchtungsvorrichtung nach Anspruch 1, wobei die Vorschaltvorrichtung (20) einen Gleichrichter (21) und einen Hochsetzsteller aufweist.

3. Beleuchtungsvorrichtung nach Anspruch 1 oder 2, wobei dem LED-Leuchtmittel (4) der Brückengleichrichter (32) zugeordnet ist.

4. Beleuchtungsvorrichtung nach einem der einem der vorangehenden Ansprüche,
**dadurch gekennzeichnet, dass** das LED-Leuchtmittel (4) als LED-Modul ausgebildet ist, in dem Brückengleichrichter (32) und Thyristor-Klemmschaltung (33), insbesondere in parallelen Anordnungen, enthalten sind.

5. Beleuchtungsvorrichtung nach einem der vorangehenden Ansprüche, wobei das LED-Leuchtmittel (4) Anschlüsse (12, 13,14, 15) aufweist, die denen einer Leuchtstofflampe (3) entsprechen, wobei sowohl die Leuchtstofflampen (3) als auch das LED-Leuchtmittel (4) alternativ in die gleichen Kontaktierungen (18,19) eingesetzt werden können.

6. Beleuchtungsvorrichtung nach einem der vorangehenden Ansprüche, wobei die Beleuchtungsvorrichtung (2) einen Grundkörper (5) zur Halterung des Leuchtmittels (3,4) und eine transparente oder transluzente Abdeckung (6) aufweist, die auf dem Grundkörper (5) aufgesetzt ist und das Leuchtmittel (3,4) abdeckt.

7. Beleuchtungsvorrichtung nach einem der vorangehenden Ansprüche, wobei die Beleuchtungsvorrichtung Kontaktierungen (18, 19) zur Aufnahme von wenigstens zwei verschiedenen parallel angeordneten Leuchtstofflampen (3) aufweist, in die alternativ das LED-Leuchtmittel (4) eingesetzt werden kann.

8. Beleuchtungsvorrichtung nach einem der vorangehenden Ansprüche, wobei die Beleuchtungsvorrichtung (2) ausgelegt ist mit Wechselspannung versorgt zu werden.

9. Beleuchtungsvorrichtung nach einem der vorangehenden Ansprüche, wobei an beiden Enden des LED-Leuchtmittels (4) Stiftgehäuse (26,27) zur Bereitstellung von Anschlüssen und insbesondere Stiftkontakten angeordnet sind.

10. Beleuchtungsvorrichtung nach einem der vorangehenden Ansprüche, wobei jede Kontaktierung (18, 19) der Beleuchtungsvorrichtung eine Verriegelungseinrichtung zur Verriegelung der in den jeweiligen Sockel eingesetzten Anschlüsse beziehungsweise Stiftkontakte aufweist.

## Claims

1. An illumination device (2) comprising at least one contacting (18, 19) into which an illuminant (3, 4) can be inserted, wherein the contacting (18, 19) comprises electrical connections for supplying the illuminant (3, 4), and wherein an electrical or electronic ballast device (20) is arranged in the illumination device (2), for electrically supplying a fluorescent lamp (3), wherein the ballast device (20) comprises a transistor half bridge (30) which is operated having a switching frequency, and an LC series resonant circuit (31), to the capacitor of which the illuminant is connected in parallel, and the ballast device (20) can be used for a number of series-connected LEDs (22) of an LED illuminant (4), wherein a current value of the number of LEDs substantially corresponds to a lamp current during operation of the illumination device (2) with a fluorescent lamp (3), the LED illuminant (4) is assigned a thyristor clamping circuit as a protective circuit (33), between LEDs (22) and a bridge rectifier (32), wherein the bridge rectifier (32) comprises four diodes, the blocking delay times of which are adjusted to the switching frequency of the ballast device (20), and wherein the illumination device (2) is designed so as to be protected against explosion and the illuminant is Ex e, Ex d, Ex m or Ex op.

2. The illumination device according to claim 1, wherein the ballast device (20) comprises a rectifier (21) and a boost converter.

3. The illumination device according to either claim 1 or claim 2, wherein the bridge rectifier (32) is assigned to the LED illuminant (4).

4. The illumination device according to any of the preceding claims, **characterized in that** the LED illuminant (4) is designed as an LED module in which the bridge rectifier (32) and the thyristor clamping circuit (33) are contained, in particular in parallel arrangements.

5. The illumination device according to any of the preceding claims, wherein the LED illuminant (4) comprises connections (12, 13, 14, 15) which correspond to those of a fluorescent lamp (3), wherein both the fluorescent lamps (3) and the LED illuminant (4) can be inserted, alternately, into the same contactings (18, 19).

6. The illumination device according to any of the preceding claims, wherein the illumination device (2) comprises a base body (5) for holding the illuminant (3, 4) and a transparent or translucent cover (6) which is placed on the base body (5) and covers the illuminant (3, 4).

7. The illumination device according to any of the preceding claims, wherein the illumination device comprises contactings (18, 19) for receiving at least two different fluorescent lamps (3) arranged in parallel, into which contacts alternatively the LED illuminant (4) can be inserted.

8. The illumination device according to any of the preceding claims, wherein the illumination device (2) is designed to be supplied with alternating voltage.

9. The illumination device according to any of the preceding claims, wherein pin housings (26, 27) for providing connections, and in particular pin contacts, are arranged at both ends of the LED illuminant (4).

10. The Illumination device according to any of the preceding claims, wherein each contacting (18, 19) of the illumination device comprises a locking means for locking the connections or pin contacts inserted into the respective sockets.

## Revendications

1. Dispositif d'éclairage (2), comportant au moins un contact (18, 19), dans lequel une lampe (3, 4) peut être insérée, dans lequel le contact (18, 19) présente des raccords électriques pour l'alimentation de la lampe (3, 4) et dans lequel un dispositif de ballast électrique ou électronique (20) est agencé dans le dispositif d'éclairage (2) pour l'alimentation électrique d'une lampe fluorescente (3), dans lequel le dispositif de ballast (20) présente un demi-pont à transistor (30), qui fonctionne à une fréquence de commutation, et un circuit oscillant série LC (31), au condensateur duquel la lampe est connectée en parallèle, et le dispositif de ballast (20) peut être utilisé pour un certain nombre de DEL (22) connectées en série d'une lampe à DEL (4), dans lequel une valeur de courant du nombre de DEL correspond essentiellement à un courant de lampe lors du fonctionnement du dispositif d'éclairage (2) avec une lampe fluorescente (3), qu'un circuit de blocage de thyristor est attribué en guise de circuit de protection (33) à la lampe à DEL (4) entre des DEL (22) et un redresseur en pont (32), dans lequel le redresseur en pont (32) présente quatre diodes, qui sont adaptées en ce qui concerne leurs temps de retard de blocage à la fréquence de commutation du dispositif de ballast (20) et dans lequel le dispositif d'éclairage (2) est conçu pour être antidéflagrant et la lampe Ex e, Ex d, Ex m ou Ex op.

2. Dispositif d'éclairage selon la revendication 1, dans lequel le dispositif de ballast (20) présente un redresseur (21) et un convertisseur élévateur.

3. Dispositif d'éclairage selon la revendication 1 ou 2, dans lequel le redresseur en pont (32) est attribué à la lampe à DEL (4).

4. Dispositif d'éclairage selon l'une quelconque des revendications précédentes, **caractérisé en ce que** la lampe à DEL (4) est conçue comme un module à DEL, dans lequel le redresseur en pont (32) et le circuit de blocage de thyristor (33) sont contenus, en particulier dans des agencements parallèles.

5. Dispositif d'éclairage selon l'une quelconque des revendications précédentes, dans lequel la lampe à DEL (4) présente des raccords (12, 13, 14, 15), qui correspondent à ceux de la lampe fluorescente (3), dans lequel aussi bien les lampes fluorescentes (3) que la lampe à DEL (4) peuvent être utilisées alternativement dans les mêmes contacts (18, 19).

6. Dispositif d'éclairage selon l'une quelconque des revendications précédentes, dans lequel le dispositif d'éclairage (2) présente un corps de base (5) pour le support de la lampe (3, 4) et un couvercle transparent ou translucide (6), qui est placé sur le corps de base (5) et recouvre la lampe (3, 4).

7. Dispositif d'éclairage selon l'une quelconque des revendications précédentes, dans lequel le dispositif d'éclairage présente des contacts (18, 19) pour la réception d'au moins deux lampes fluorescentes (3) différentes agencées en parallèle, dans lesquelles alternativement la lampe à DEL (4) peut être utilisée.

8. Dispositif d'éclairage selon l'une quelconque des revendications précédentes, dans lequel le dispositif d'éclairage (2) est conçu pour être alimenté avec une tension alternative.

9. Dispositif d'éclairage selon l'une quelconque des revendications précédentes, dans lequel aux deux extrémités de la lampe à DEL (4), des logements de broche (26, 27) sont agencés pour la fourniture de raccords et en particulier de contacts à broche.

10. Dispositif d'éclairage selon l'une quelconque des revendications précédentes, dans lequel chaque contact (18, 19) du dispositif d'éclairage présente un dispositif de verrouillage pour le verrouillage des raccords ou des contacts à broche insérés dans la douille respective.
